# EUROPEAN PATENT APPLICATION

(11) **EP 4 755 238 A1**
(43) Date of publication of application: **10.06.2026**
(21) Application number: 24852148.6
(22) Date of filing: 26.07.2024
(51) Int. Cl.: A24F 40/95, A24F 40/42, A24F 40/46, A24F 40/50

(54) **AEROSOL-GENERATING DEVICE**

(30) Priority: 04.08.2023 KR 20230102239; 19.10.2023 KR 20230140616
(71) Applicant: KT&G Corporation, Daedeok-gu Daejeon 34337 (KR)
(72) Inventor: JANG, Chul Ho, Bucheon-si, Gyeonggi-do 14725 (KR); KIM, Jae Hyuk, Seoul 06352 (KR); PARK, Sang Cheol, Suwon-si, Gyeonggi-do 16469 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010962
(87) International publication number: WO 2025/033792

(57) **Abstract**

An aerosol-generating device includes a housing including a battery accommodation space, a heater located inside the housing and configured to heat an aerosol-generating material, a battery detachably coupled to the battery accommodation space, configured to supply power to the heater, and including at least one accommodation groove, and at least one fixing member arranged in the battery accommodation space and configured to fix battery to the battery accommodation space by being coupled to the at least one accommodation groove when the battery is coupled to the battery accommodation space, wherein a shape of the at least one fixing member is changed to be decoupled from the at least one accommodation groove when a temperature reaches a designated first temperature or greater while being coupled to the at least one accommodation groove.

## Description

### Technical Field

Embodiments relate to an aerosol-generating device capable of stably fixing a detachable battery in a battery accommodation space while allowing detaching of the battery from the battery accommodation space when the battery is over-heated.

### Background Art

There is a growing demand for an aerosol-generating device that generates aerosols by using a non-burning method instead of a method of generating aerosols by burning a cigarette. An aerosol-generating device is a device that performs a function of, for example, generating aerosols from an aerosol-generating material in a non-combustible method and supplying the aerosols to a user or generating aerosols having a flavor by passing vapors generated from an aerosol-generating material through a flavoring medium.

An aerosol-generating device includes a battery for supplying power and a heater configured to generate heat when power is supplied thereto and may generate aerosols by heating an aerosol-generating material through the heater.

Existing aerosol-generating devices generally include an integrated battery to miniaturize the overall size of the device and increase the degree of freedom of device design. Recently, studies on aerosol-generating devices using detachable batteries have increased in an attempt to increase a usage time of the aerosol-generating devices and improve user convenience.

### Disclosure of Invention

### Technical Problem

When using an aerosol-generating device including a detachable battery, it may be necessary to replace the battery due to deterioration of the battery. For example, when the battery is over-charged by an external power source or is over-heated by heat generated while aerosols are generated, a performance of the battery may deteriorate and thus it may be necessary to replace the battery.

For an existing aerosol-generating device using a detachable battery, it is difficult for a user to identify deterioration of the battery and thus the battery may not be replaced at an appropriate time. When the deteriorated battery is used without being replaced, power may not be smoothly supplied to components of the aerosol-generating device and the aerosol-generating device may not operate normally. Thus, there is a need to effectively notify the user of the deterioration of the battery.

An aerosol-generating device according to various embodiments of the present disclosure stably fixes a battery to a battery accommodation space through a fixing member having a shape changing according to a temperature change of the battery, while detaching the battery from the battery accommodation space when the battery is over-heated, thereby effectively notifying a user of a state (e.g.: deterioration) of the battery.

The technical problems of the present disclosure are not limited to the above-described description, and other technical problems may be clearly understood by one of ordinary skill in the art from the embodiments to be described hereinafter.

### Solution to Problem

An aerosol-generating device according to an embodiment includes a housing including a battery accommodation space, a heater located inside the housing and configured to heat an aerosol-generating material, a battery detachably coupled to the battery accommodation space, configured to supply power to the heater, and including at least one accommodation groove, and at least one fixing member arranged in the battery accommodation space and configured to fix the battery to the battery accommodation space by being coupled to the at least one accommodation groove when the battery is coupled to the battery accommodation space, wherein a shape of the at least one fixing member is changed to be decoupled from the at least one accommodation groove when a temperature reaches a designated first temperature or greater while being coupled to the at least one accommodation groove.

### Advantageous Effects of Invention

An aerosol-generating device according to various embodiments of the present disclosure can effectively notify a user of whether deterioration of a battery has occurred.

However, effects of the embodiments are not limited to the above-described effects, and effects not mentioned may be clearly understood by one of ordinary skill in the art to which the embodiments

### Brief Description of Drawings

FIG. 1 is a perspective view of an aerosol-generating device according to an embodiment.
FIG. 2 is a diagram for describing an aerosol-generating device according to an embodiment.
FIG. 3 is a diagram for describing an aerosol-generating device according to another embodiment.
FIG. 4 is a diagram for describing an aerosol-generating device according to another embodiment.
FIG. 5 is a diagram for describing an aerosol-generating device according to another embodiment.
FIG. 6 is a diagram for describing an aerosol-generating device according to another embodiment.
FIG. 7 is an exploded perspective view of some components of an aerosol-generating device according to an embodiment.
FIG. 8 is a diagram showing a battery coupled to a battery accommodation space in the aerosol-generating device of FIG. 7.
FIG. 9 is a diagram showing a shape of a fixing member changed in the aerosol-generating device of FIG. 8.
FIG. 10 is a cross-sectional view of a battery cover located at a first position in an aerosol-generating device according to another embodiment.
FIG. 11 is a cross-sectional view of the battery cover located at a second position in the aerosol-generating device of FIG. 10.
FIG. 12 is a diagram showing a shape of a hook structure changed in the aerosol-generating device of FIG. 11.
FIG. 13 is a block diagram of an aerosol-generating device according to an embodiment.

### Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

In addition, when describing the embodiments of the disclosure, the detailed description of the related known art, which may obscure the subject matter of the embodiments, may be omitted. Also, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

Although the terms first, second, etc. may be used herein to describe various elements or components, these elements or components should not be limited by these terms. These terms are only used to distinguish one element or component from another element or component.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

The singular forms are intended to include the plural forms as well, unless the context clearly indicates otherwise.

Hereinafter, the present disclosure will now be described more fully with reference to the accompanying drawings, in which exemplary embodiments of the present disclosure are shown such that one of ordinary skill in the art may easily work the present disclosure. However, the present disclosure may be implemented in various different forms and is not limited to the embodiments described herein.

The same or similar components will be assigned the same reference numerals regardless of the reference numerals in the drawings, and the same descriptions thereof will be omitted.

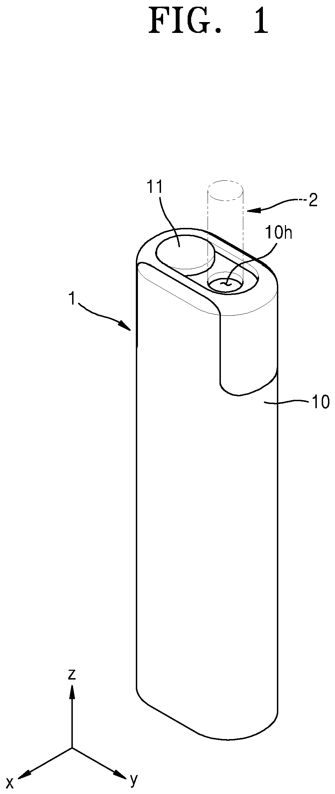

FIG. 1 is a perspective view of an aerosol-generating device according to an embodiment.

The aerosol generating device 1 can generate and provide aerosols..

The aerosol generating device 1 may include a main body 10. The main body 10 forms the overall exterior of the aerosol generating device 1 and may include an internal space. At least one of an article accommodation portion 10h, a heater (not shown), a controller (not shown) and a battery (not shown) may be arranged inside the main body 10.

The article accommodation portion 10h may provide a space where an aerosol-generating article 2 can be detachably coupled or inserted. The aerosol generating article 2 may include an aerosol generating material that is heated by the heater to produce an aerosol. The article accommodation portion 10h may provide a space opened toward the exterior of the main body 10 to allow the aerosol generating article 2 to the inserted thereinto.

The article accommodation portion 10h may be formed by being recessed toward the interior of the main body 10 so that at least a part of the aerosol generating article 2 may be inserted into the insertion space. The depth of the article accommodation portion 10h may correspond to a length of a region in the aerosol generating article 2 including an aerosol generating material and/or a medium. A portion of the aerosol generating article 2 may be inserted into the main body 10, and another portion of the aerosol generating article 2 may protrude to the outside of the main body 10. A user may inhale air by holding, in the mouth, the portion of the aerosol generating article 2 exposed to the outside.

The main body 10 may further include a cover 11 for opening or closing an article accommodating portion 10h. The cover 11 may be movably arranged in the main body 10 to expose the article accommodating portion 10h to the outside of the aerosol-generating device 1 or to cover the article accommodating portion 10h so that the article accommodating portion 10h is not exposed to the outside of the aerosol-generating device 1. For example, the cover 11 may expose the article accommodating portion 10h to the outside of the article accommodating portion 10h by opening the article accommodating portion 10h at a first position so that the aerosol-generating article 2 is inserted into the article accommodating portion 10h. Also, the cover 11 may not expose the article accommodating portion 10h to the outside by moving from the first position to a second position and closing the article accommodating portion 10h so that the article accommodating portion 10h is protected from an external impact or introduction of external impurities.

The heater (not shown) disposed inside the main body 10 may heat the aerosol-generating article 2. For example, the heater may include at least one of a tube-type heater, a plate-type heater, a needle-type heater and a rod-type heater. The heater may include an electrically resistive heater and/or an induction heater.

For example, the heater may be a resistive heater. The heater may include an electrically conductive track, and be heated as a current flows through the electrically conductive track. The heater may be electrically connected to a power source. The heater may generate heat by receiving a current from the power source.

For example, the heater may be a multiple heater. The heater may include a first heater and a second heater. The first heater and the second heater may be heated sequentially or simultaneously.

The aerosol generating device 1 may include an induction coil. The induction coil may make the heater generate heat. The heater may include a susceptor. The susceptor may generate heat by a magnetic field generated by an AC current flowing through the induction coil. The magnetic field may penetrate the susceptor and generate an eddy current within the the susceptor. The eddy current may make the susceptor geneatre heat.

In another example, the susceptor may be included inside the aerosol generating article 2. The susceptor inside the aerosol generating article 2 may generate heat by a magnetic field generated by an AC current flowing through the induction coil. The susceptor may be disposed inside the aerosol generating article 2 and may not be electrically connected to the aerosol generating device. The susceptor may be inserted into the article accommodation portion 10h together with the aerosol generating article 2 and may be removed from the article accommodation portion 10h together with the aerosol generating article 2. When an AC current flows through the induction coil, the aerosol generating article 2 may be heated by the susceptor inside the aerosol generating article 2.

The power source may supply power such that the components of the aerosol-generating device 1 operate. The power source may be a battery capable of storing electric power. The power source may provide electric power to components such as the heater, the induction coil, and the controller.

The controller may control overall operations of the aerosol-generating device 1. The controller may be mounted on a printed circuit board (PCB). The controller may control an operation of at least one of the heater, the induction coil or the power supply. The controller may control the operation of components such as a display, an actuator (motor), etc. installed in the aerosol generating device 1. The controller may check a state of each of the components of the aerosol-generating device 1 to determine whether the aerosol-generating device 1 is in an operable state.

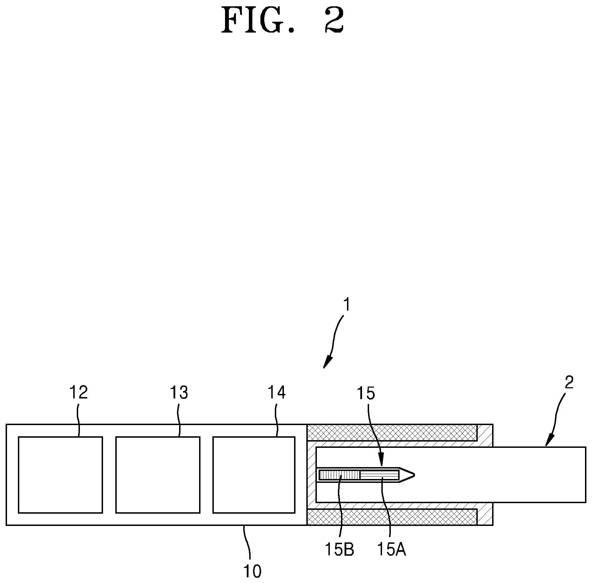

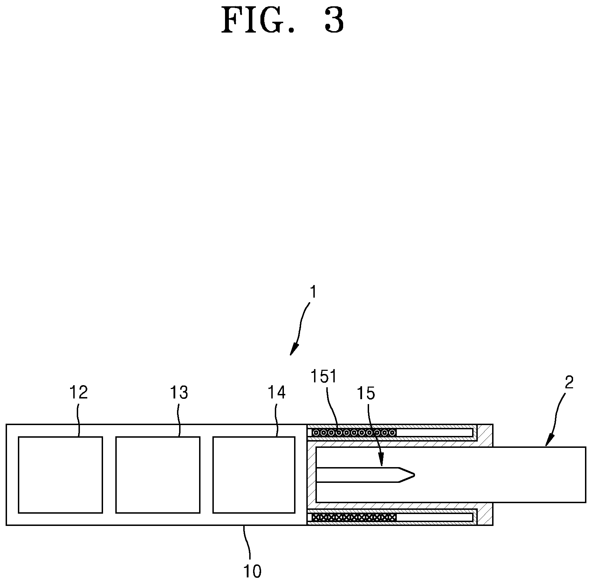

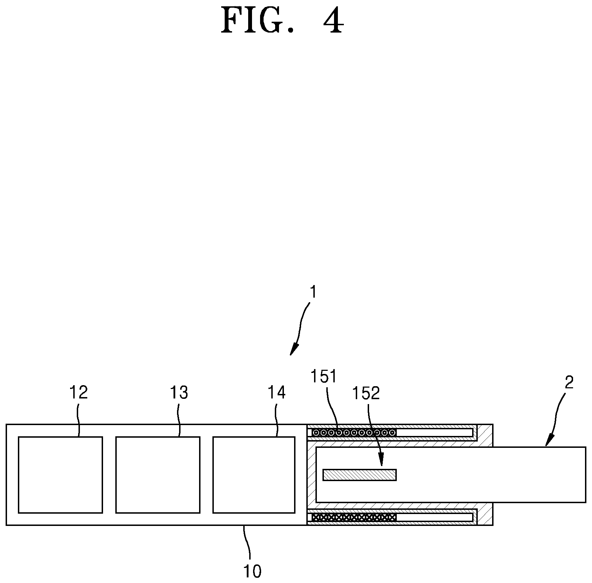

FIG. 2 is a diagram for describing an aerosol-generating device according to an embodiment, FIG. 3 is a diagram for describing an aerosol-generating device according to another embodiment, and FIG. 4 is a diagram for describing an aerosol-generating device according to another embodiment.

Referring to FIG 2, the aerosol-generating device 1 according to an embodiment of the present disclosure may include at least one of a battery 12, a controller 13, a sensor unit 14, or a heater 15. At least one of the battery 12, the controller 13, the sensor unit 14, and the heater 15 may be disposed inside a main body 10 of the aerosol-generating device 1.

The main body 10 may provide a space opened toward one side to allow an aerosol generating article 2 to the inserted thereinto. The space opened toward the one side may be referred to as an article accommodation portion. The article accommodation portion may be formed by being recessed toward the interior of the main body 10 to a preset depth so that at least a part of the aerosol generating article 2 may be inserted into the insertion space. The depth of the article accommodation portion may correspond to a length of a region in the aerosol generating article 2 including an aerosol generating material and/or a medium. A lower end of the aerosol generating article 2 may be inserted into the main body 10, and an upper end of the aerosol generating article 2 may protrude to the outside of the main body 10. A user may inhale air by holding, in the mouth, the upper end of the aerosol generating article 2 exposed to the outside.

The heater 15 may heat the aerosol generating article 2. The heater 15 may extend outward in the longitudinal direction of the space where the aerosol generating article 2 is inserted. For example, the heater 15 may include at least one of a tube-type heater, a plate-type heater, a needle-type heater and a rod-type heater. The heater 15 may be inserted into one end of the aerosol generating article 2. The heater 15 may include an electrically resistive heater and/or an induction heater.

For example, referring to FIG. 2, the heater 15 may be a resistive heater. For example, the heater 15 may include an electrically conductive track, and be heated as a current flows through the electrically conductive track. The heater 15 may be electrically connected to the battery 12. The heater 15 may directly generate heat by receiving a current from the battery 12.

For example, the heater 15 may be a multiple heater. The heater may include a first heater 15A and a second heater 15B. The first heater 15A and the second heater 15B may be arranged side by side along the longitudinal direction. The first heater 15A and the second heater 15B may be heated sequentially or simultaneously.

For example, referring to FIG. 3, the aerosol-generating device 1 may include an induction coil 151 surrounding the heater 15. The induction coil 151 may make the heater 15 generate heat. The heater 15, which is a susceptor, may generate heat by a magnetic field generated by an AC current flowing through the induction coil 151. The magnetic field may penetrate the heater 15 and generate an eddy current within the heater 15. The current may generate heat in the heater 15. The current may generate heat in the heater 15.

For example, referring to FIG. 4, the susceptor 152 may be included inside the aerosol generating article 2, and the susceptor 152 inside the aerosol generating article 2 may generate heat by a magnetic field generated by an AC current flowing through the induction coil 151. The susceptor 152 may be disposed inside the aerosol generating article 2 and may not be electrically connected to the aerosol generating device. The susceptor 152 may be inserted into the article accommodation portion together with the aerosol generating article 2 and may be removed from the article accommodation portion together with the aerosol generating article 2. The aerosol generating article 2 may be heated by the susceptor 152 inside the aerosol generating article 2. In this case, the aerosol generating device 1 may not be provided with a heater 15.

The battery 12 may supply power such that the components of the aerosol-generating device 1 operate The battery 12 may supply power to at least one of the controller 13, the sensor unit 14, or the heater 15. The battery 12 may supply power to the induction coil 151.

The battery 12 may be a power source attachable to or detachable from the aerosol-generating device 1. For example, the battery 12 may be detachably coupled to a battery accommodation space (not shown) of the aerosol-generating device 1 and supply power to components of the aerosol-generating device 1 by being electrically connected to a terminal of the battery accommodation space.

The aerosol-generating device 1 may further include a charging interface for connecting the aerosol-generating device 1 to an external power source. For example, the battery 12 may be electrically connected to the external power source (e.g.: a charger) through the charging interface and charged by power supplied from the external power source.

The controller 13 may control overall operations of the aerosol-generating device 1. The controller 13 may be mounted on a printed circuit board (PCB). The controller 13 may control an operation of at least one of the battery 12, the sensor unit 14 or the heater 15. The controller 13 may control the operation of the induction coil 151. The controller 13 may control the operation of components such as a display, an actuator (motor), etc. installed in the aerosol generating device 1. The controller 13 may check a state of each of the components of the aerosol-generating device 1 to determine whether the aerosol generating device 1 is in an operable state.

The controller 13 may analyze a result detected by the sensor unit 14 and control processes to be performed subsequently. For example, the controller 13 may control the power supplied to the heater 15 such that the operation of the heater 15 starts or ends based on a result detected by the sensor unit 14. For example, the controller 13 may control an amount of power supplied to the heater 15 and a time for which the power is supplied to the heater 15 such that the heater 15 may be heated to a preset temperature or maintained at an appropriate temperature based on the result detected by the sensor unit 14.

The sensor unit 14 may include at least one of a temperature sensor, a puff sensor, or an insertion detection sensor. For example, the sensor unit 14 may sense at least one of the temperature of the heater 15, the temperature of the battery 12, or the temperature inside and outside the main body 10. For example, the sensor unit 14 may sense a puff by the user. For example, the sensor unit 14 may sense whether the aerosol generating article 2 has been inserted into the insertion space. For example, the sensor unit 14 may sense a movement of the aerosol generating device 1.

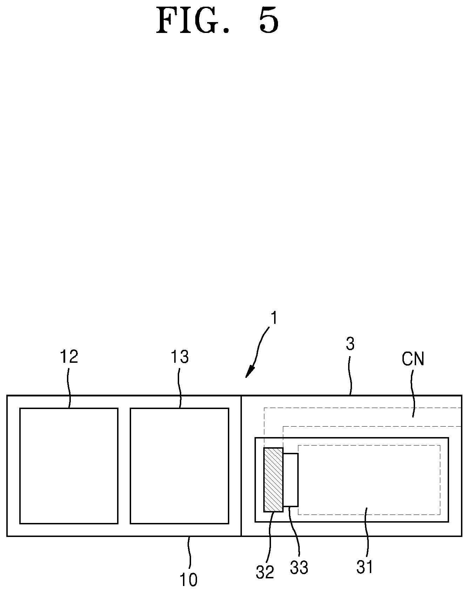

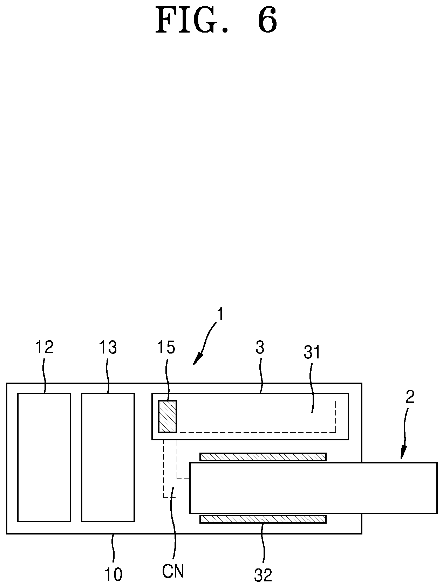

FIG. 5 is a diagram for describing an aerosol-generating device according to another embodiment and FIG. 6 is a diagram for describing an aerosol-generating device according to another embodiment.

Referring to FIG 5, the aerosol generating device 1 may include a cartridge 3 and the main body 10. The aerosol generating device 1 may include at least one of a battery 12, a controller 13 and a sensor (not shown). At least one of the battery 12 and the controller 13 may be arranged inside a main body 10 of the aerosol generating device 1. The main body 10 may be equipped with a cartridge 3 containing an aerosol generating material. The user may place a mouthpiece (not shown) provided at one end of the cartridge 3 in their mouth and inhale the aerosol.

The cartridge 3 may contain an aerosol generating material in any one of a liquid state, a solid state, a gaseous state, a gel state, and the like within a storage space 31. The aerosol generating material may include a liquid composition. For example, the liquid composition may be a liquid including a tobacco-containing material having a volatile tobacco flavor component, or a liquid including a non-tobacco material.

The cartridge 3 may be detachably coupled to the main body 10. The cartridge 3 may be mounted to the main body 10 by being coupled to the main body 10.

The main body 10 may be formed in a structure in which external air may be introduced into the main body 10 while the cartridge 3 is coupled to the main body 10. Here, the external air introduced into the main body 10 may pass through the cartridge 3 and flow into the mouth of the user.

The cartridge 3 may include a storage space 31 containing the aerosol generating material and/or a generation unit 32 The generation unit 32 may heat the aerosol generating material inside the storage space 31. The cartridge 3 may include a liquid delivery element 33 capable of absorbing the aerosol generating material. Here, the liquid delivery element 33 may include a wick or the like such as a cotton fiber, a ceramic fiber, a glass fiber, or porous ceramic. An electrically conductive track of the generation unit 32 may be formed in a coil-shaped structure that is wound around the liquid delivery element or in a structure in contact with one side of the liquid delivery element 33. The generation unit 32 may be referred to as 'a cartridge heater'.

The cartridge 3 may generate an aerosol. When the liquid delivery element 33 is heated by the generation unit 32 an aerosol may be generated. The aerosol may be inhaled into the mouth of the user through an air flow channel CN.

The air flow channel CN may be provided in the cartridge 3. The air flow channel CN may connect the generation unit 32 of the cartridge 3 to the exterior of the cartridge 3. One end of the air flow channel CN may be open to the generation unit 32, while the other end may be connected to the exterior. For example, the air flow channel CN may extend along the longitudinal direction of the cartridge 3 from the one side of the storage space 31 of the cartridge 3. For example, the air flow channel CN may pass through the cartridge 3 and extend along the longitudinal direction of the cartridge 3.

Referring to FIG 6, the aerosol generating device 1 according to an embodiment may accommodate the aerosol generating article 2. For example, the aerosol generating article 2 may be accommodated in the cartridge 3. As another example, the aerosol generating article 2 may be accommodated in the main body 10.

The aerosol generating article 2 may allow the aerosol generated by the generation unit 32 to pass through. The aerosol generating device 1 may include an article accommodation portion that accommodates the aerosol generating article 2. The aerosol generated inside the generation unit 32 may pass through the aerosol generating article 2 accommodated in the article accommodation portion and be discharged to the exterior of the aerosol generating device 1. At this time, the user may place their mouth on the aerosol generating article 2 and inhale the aerosol discharged to the exterior of the aerosol generating device 1 through the aerosol generating article 2.

Referring to FIG 6, the aerosol generating device 1 further include a heater 15 for heating the aerosol generating article 2. The heater 15 may heat the aerosol generating article 2. The heater 15 may extend longitudinally upward around the space into which the aerosol generating article 2 is inserted. The heater 15 may include an electrically resistive heater and/or an induction heater.

The controller 13 may control overall operations of the aerosol-generating device 1. The controller 13 may be mounted on a printed circuit board (PCB). The controller 13 may control an operation of at least one of the cartridge 3, the battery 12 or the sesnor. For example, the controller 13 may control the operation of components such as a display (not shown), an audio output device (not shown), a haptic unit (not shown), and an actuator (motor) (not shown), etc. installed in the aerosol generating device 1. The controller 13 may check a state of each of the components of the aerosol-generating device 1 to determine whether the aerosol generating device 1 is in an operable state.

The controller 13 may analyze a result detected by the sensor and control processes to be performed subsequently. For example, the controller 13 may control the power supplied to the generation unit 32 such that the operation of the generation unit 32 starts or ends based on a result detected by the sensor. For example, the controller 13 may control an amount of power supplied to the generation unit 32 and a time for which the power is supplied to the generation unit 32 such that the generation unit 32 may be heated to a certain temperature or maintained at an appropriate temperature based on the result detected by the sensor.

The battery 12 may supply power to the components of the aerosol-generating device 1. For example, the battery 12 may supply electrical power to at least one of the controller 13, the sensor (not shown), or the heater 15.

The battery 12 may be a power source attachable to or detachable from the aerosol-generating device 1. For example, the battery 12 may be detachably coupled to a battery accommodation space (not shown) of the aerosol-generating device 1 and supply power to components of the aerosol-generating device 1 by being electrically connected to a terminal of the battery accommodation space.

The aerosol-generating device 1 may further include a charging interface for connecting the aerosol-generating device 1 to an external power source. For example, the battery 12 may be electrically connected to the external power source (e.g.: a charger) through the charging interface and charged by power supplied from the external power source.

The sensor may include at least one of a temperature sensor, a puff sensor, a cartridge detection sensor or a movement detection sensor. For example, the sensor may sense at least one of the temperature of the generation unit 32, the temperature of the battery 12, or the temperature inside and outside the main body 10. For example, the sensor may sense a puff by the user. For example, the sensor may sense whether the cartridge 3 is mounted. For example, the sensor may sense a movement of the aerosol generating device 1.

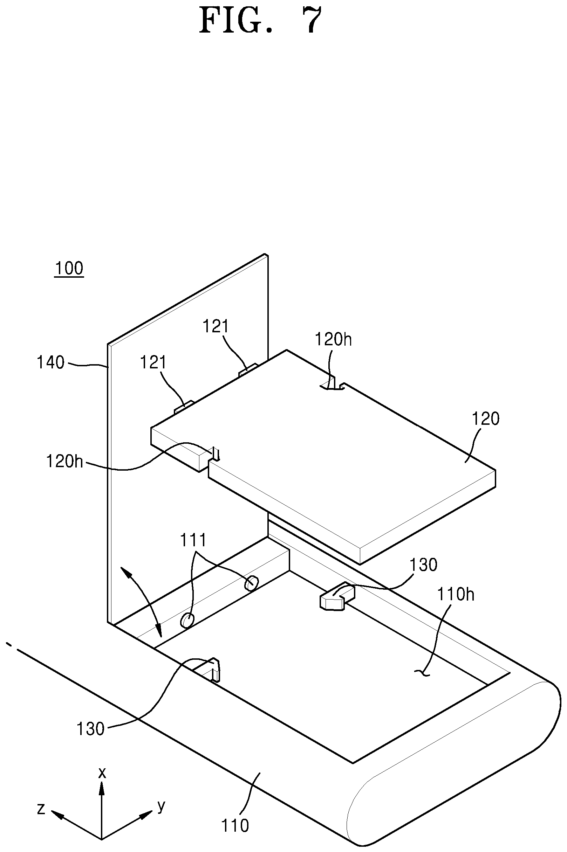

FIG. 7 is an exploded perspective view of some components of an aerosol-generating device according to an embodiment. In FIG. 7, only some components of an aerosol-generating device 100 is illustrated, but components of the aerosol-generating device 100 are not limited to those illustrated.

Referring to FIG. 7, the aerosol-generating device 100 according to an embodiment may include a housing 110, a battery 120, and at least one fixing member 130. The aerosol-generating device 100 may be an embodiment of the aerosol-generating device 1 of FIGS. 1 to 6, and redundant descriptions are omitted below.

The housing 110 may form an overall exterior of the aerosol-generating device 100 and components of the aerosol-generating device 100 may be arranged in the housing 110. For example, a heater (e.g.: the heater 15 of FIGS. 2, 3, and 5) or a generator (e.g.: the generator 32 of FIG. 5) configured to generate aerosols by heating an aerosol-generating material, and a processor (e.g.: the controller 13 of FIGS. 2 to 6) may be arranged in the housing 110, but an embodiment is not limited thereto.

According to an embodiment, the housing 110 may include a battery accommodation space 110h for accommodating the battery 120. For example, the battery accommodation space 110h may be formed on one area (e.g.: an area facing an x direction) of the housing 110 to accommodate the battery 120, but a location of the battery accommodation space 110h is not limited thereto.

At least one terminal 111 may be arranged in the battery accommodation space 110h and the at least one terminal 111 may come into contact with an electrode 121 of the battery 120 when the battery 120 is coupled to or accommodated in the battery accommodation space 110h. In drawings, only an embodiment in which two terminals 111 are arranged on a side surface of the battery accommodation space 110h is illustrated, but an arrangement structure and the number of the at least one terminal 111 is not limited thereto.

The battery 120 may be detachably coupled to the battery accommodation space 110h of the housing 110 and supply power for operations of components of the aerosol-generating device 100. For example, when the battery 120 is coupled to the battery accommodation space 110h, the electrode 121 of the battery 120 may come into contact with the at least one terminal 111 and accordingly, the battery 120 may be electrically connected to the components (e.g.: the heater and the processor) of the aerosol-generating device 100. The battery 120 may operate the components of the aerosol-generating device 100 by supplying power to the components of the aerosol-generating device 100 electrically connected thereto.

The at least one fixing member 130 may be arranged in the battery accommodation space 110h and fix the battery 120 in the battery accommodation space 110h. For example, the battery 120 may include at least one accommodation groove 120h and the at least one fixing member 130 may be coupled to the at least one accommodation groove 120h. As such, when the at least one fixing member 130 and the at least one accommodation groove 120h are coupled to each other, the battery 120 may be fixed in the battery accommodation space 110h. In drawings, only an embodiment in which two accommodation grooves 120h (e.g.: a first accommodation groove and a second accommodation groove) are formed in the battery 120 and two fixing members 130 (e.g.: a first fixing member and a second fixing member) couplable to the two accommodation grooves 120h are arranged in the battery accommodation space 110h is illustrated, but the numbers of accommodation grooves 120h and fixing members 130 are not limited thereto.

According to an embodiment, the aerosol-generating device 100 may further include a battery cover 140 detachably coupled to the housing 110 to project the battery 120. The battery cover 140 may be detachably coupled to the housing 110 to open or close the battery accommodation space 110h.

For example, when the battery cover 140 is detached from the housing 110, the battery accommodation space 110h is exposed to the outside of the aerosol-generating device 100 and the battery 120 may be coupled to the battery accommodation space 110h. In another example, when the battery cover 140 is coupled to the housing 110, the battery cover 140 covers the battery accommodation space 110h and prevents the battery accommodation space 110h from being exposed to the outside, thereby projecting the battery 120 from an external impact or introduction of external impurities.

According to an embodiment, the at least one fixing member 130 may include a shape memory material in which a shape changes according to a temperature. For example, the at least one fixing member 130 may include a shape memory alloy or a shape memory polymer material, but is not limited thereto.

When the battery 120 is coupled to the battery accommodation space 110h, the at least one fixing member 130 comes into contact with the at least one accommodation groove 120h of the battery 120, and thus, a shape of the at least one fixing member 130 may be changed as a temperature changes in response to a temperature change of the battery 120. For example, when the battery 120 is over-heated and the temperature of the at least one fixing member 130 reaches a designated temperature or greater, the shape of the at least one fixing member 130 may be changed to be decoupled from the at least one accommodation groove 120h.

According to the aerosol-generating device 100 of an embodiment, the battery 120 may be stably fixed to the battery accommodation space 110h when the battery 120 is not over-heated and the battery 120 may be detached from the battery accommodation space 110h when the battery 120 is over-heated, by using the at least one fixing member 130 having a shape changed according to a temperature. Thus, the aerosol-generating device 100 according to an embodiment may effectively notify a user of whether deterioration of the battery 120 has occurred.

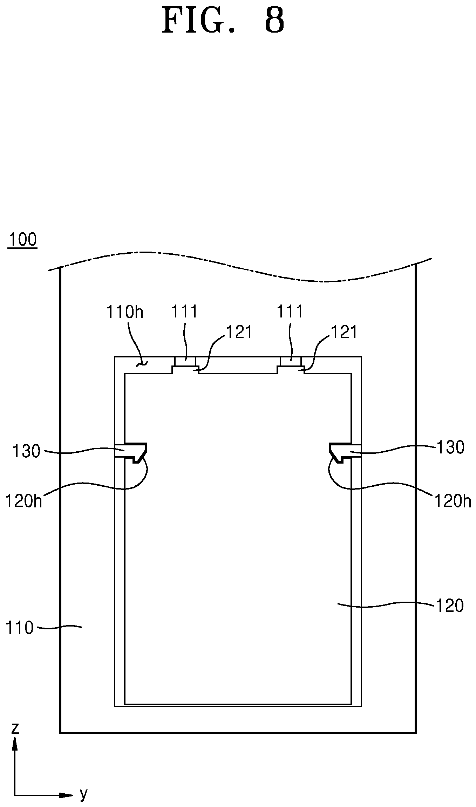

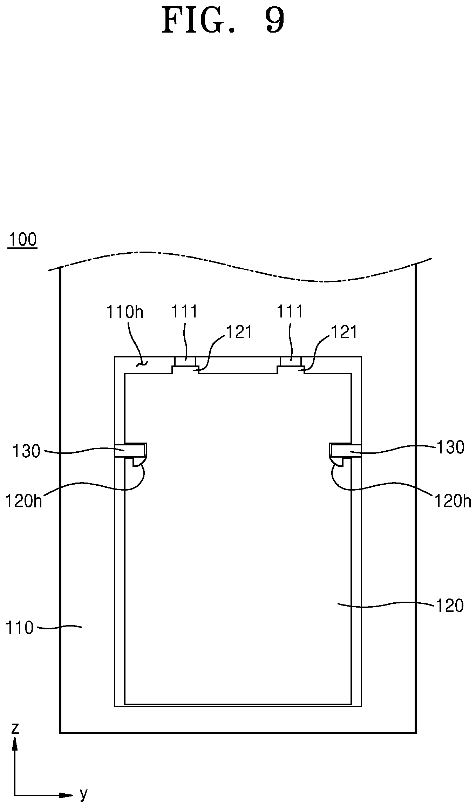

Hereinafter, a coupling state of the battery accommodation space 110h and the battery 120, according to a temperature of the battery 120, will be described in detail with reference to FIGS. 8 and 9.

FIG. 8 is a diagram showing a battery coupled to a battery accommodation space in the aerosol-generating device of FIG. 7 and FIG. 9 is a diagram showing a shape of a fixing member changed in the aerosol-generating device of FIG. 8.

Referring to FIGS. 8 and 9, the aerosol-generating device 100 according to an embodiment may include the housing 110 including the battery accommodation space 110h, the battery 120, and the at least one fixing member 130. Components of the aerosol-generating device 100 may be the same as or similar to at least one of the components of the aerosol-generating device 100 of FIG. 7, and redundant descriptions will be omitted below.

The battery accommodation space 110h may be a recess formed in one area of the housing 110 and accommodating the battery 120. For example, the battery accommodation space 110h may include a recess shape including a plurality of side surfaces, and the battery 120 accommodated in the battery accommodation space 110h may be surrounded by the plurality of side surfaces of the battery accommodation space 110h.

The at least one terminal 111 may be arranged on one side surface of the battery accommodation space 110h and the at least one terminal 111 may come into contact with the electrode 121 of the battery 120 accommodated in or coupled to the battery accommodation space 110h. When the at least one terminal 111 and the electrode 121 of the battery 120 are in contact with each other, the components of the aerosol-generating device 100 may be electrically connected to the battery 120. For example, the components (e.g.: the heater (e.g.: the heater 15 of FIG. 1) and/or the processor (e.g.: the controller 13 of FIG. 1)) of the aerosol-generating device 100 may be electrically connected to the at least one terminal 111 and the components of the aerosol-generating device 100 may be electrically connected to the battery 120 through the at least one terminal 111 to receive power from the battery 120.

The at least one fixing member 130 may be arranged in the battery accommodation space 110h and coupled to the at least one accommodation groove 120h of the battery 120 to fix the battery 120 to the battery accommodation space 110h. For example, the at least one fixing member 130 may have a shape corresponding to the at least one accommodation groove 120h of the battery 120 and may be coupled to the at least one accommodation groove 120h when the battery 120 is accommodated in or coupled to the battery accommodation space 110h. In the present disclosure, the expression "the at least one fixing member 130 has a shape corresponding to the at least one accommodation groove 120h" may indicate that the fixing member 130 has a shape to be coupled and fixed to the accommodation groove 120h.

According to an embodiment, the first fixing member may be arranged on one side surface of the battery accommodation space 110h and the second fixing member may be arranged on another side surface of the battery accommodation space 110h, which faces the one side surface, and the first fixing member and the second fixing member may be respectively coupled to the first accommodation groove and the second accommodation groove of the battery 120. However, arrangement structures and numbers of the at least one fixing member 130 and at least one accommodation groove 120h are not limited thereto. Also, in the drawings, the at least one accommodation groove 120h has a hook shape and the at least one fixing member 130 also has a hook shape corresponding to the at least one accommodation groove 120h, but shapes of the at least one accommodation groove 120h and at least one fixing member 130 are not limited thereto.

According to an embodiment, the at least one fixing member 130 includes a shape memory material (e.g.: a shape memory alloy or a shape memory polymer material) and may have a shape changed in response to a temperature change of the battery 120. When the at least one fixing member 130 comes into contact with the at least one accommodation groove 120h of the battery 120, a temperature of the at least one fixing member 130 may change in response to the temperature change of the battery 120.

For example, as shown in FIG. 8, when the temperature is lower than a designated first temperature, the at least one fixing member 130 may maintain a first shape to be couplable to the at least one accommodation groove 120h of the battery 120. For example, the at least one fixing member 130 may maintain the first shape that is a hook shape corresponding to the at least one accommodation groove 120h, at a temperature lower than the designated first temperature. As a result, in a condition where the temperature of the at least one fixing member 130 is lower than the designated first temperature, coupling between the at least one fixing member 130 and the at least one accommodation groove 120h is maintained, and thus, the battery 120 may be stably fixed in the battery accommodation space 110h.

In the present disclosure, the term "designated first temperature" may denote a temperature at which the shape of the at least one fixing member 130 starts to be changed as the battery 120 is over-heated, and such a term may be used in a same meaning below.

In another example, as shown in FIG. 9, when the temperature reaches the designated first temperature or greater, the at least one fixing member 130 may be changed into a second shape to be decoupled from the at least one accommodation groove 120h of the battery 120. For example, while the aerosol-generating device 100 is charged or used, the temperature of the battery 120 may increase and the temperature of the at least one fixing member 130 in contact with the battery 120 may also increase. When the temperature of the at least one fixing member 130 reaches the designated first temperature or greater due to over-heating of the battery 120, the shape of the at least one fixing member 130 may be changed into the second shape that does not correspond to the at least one accommodation groove 120h from the first shape corresponding to the at least one accommodation groove 120h.

In the present disclosure, the term "second shape of the at least one fixing member 130" may denote a shape (e.g.: a rectangular parallelepiped) that the at least one fixing member 130 is not in contact with the at least one accommodation groove 120h or is not coupled to the at least one accommodation groove 120h, and such a term may be used in a same meaning below. When the temperature of the at least one fixing member 130 decreases below the designated first temperature, the shape of the at least one fixing member 130 may be changed again to the first shape from the second shape.

When the shape of the at least one fixing member 130 is changed, the at least one fixing member 130 and the at least one accommodation groove 120h may be decoupled from each other, and as a result, the battery 120 may be detached from the battery accommodation space 110h.

The aerosol-generating device 100 according to an embodiment may maintain the coupling between the battery 120 and the battery accommodation space 110h when the battery 120 is not deteriorated (e.g.: over-heated) and detach the battery 120 from the battery accommodation space 110h when the battery 120 is deteriorated, by using the at least one fixing member 130 described above, thereby intuitively notifying a user of whether deterioration of the battery 120 has occurred.

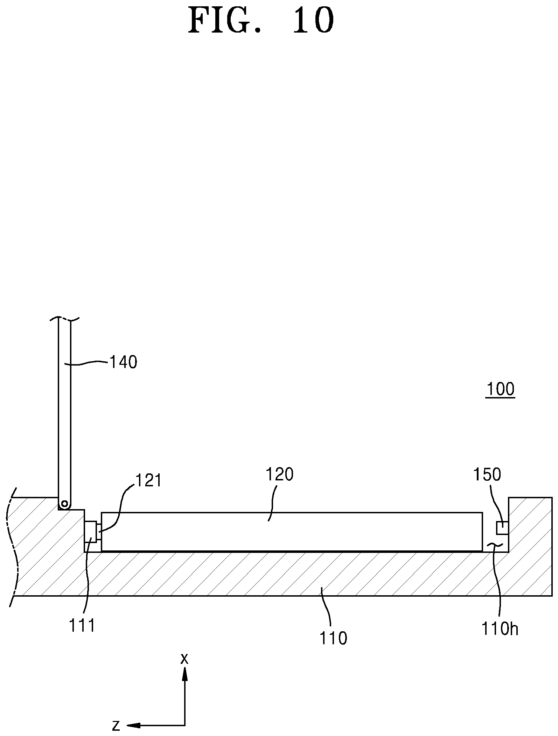

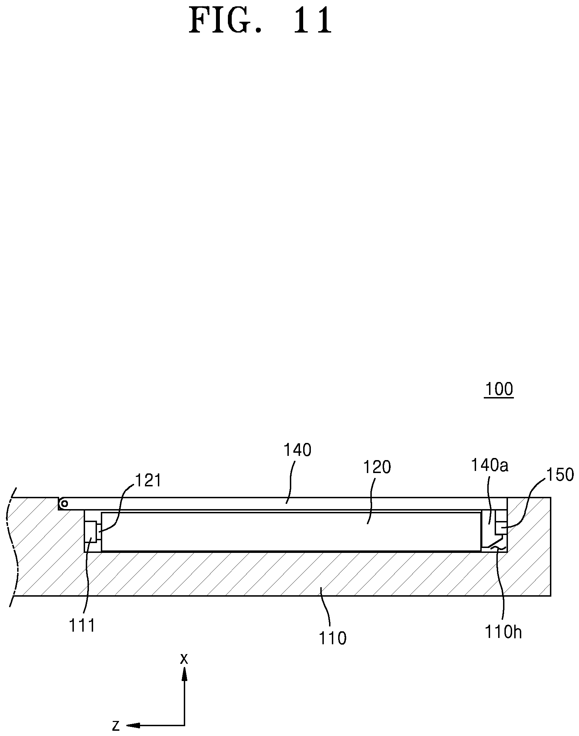

FIG. 10 is a cross-sectional view of a battery cover located at a first position in an aerosol-generating device according to another embodiment, and FIG. 11 is a cross-sectional view of the battery cover located at a second position in the aerosol-generating device of FIG. 10. FIGS. 10 and 11 are cross-sectional views of the aerosol-generating device 100 of FIG. 7 cut in an xz plane, and the components of the aerosol-generating device 100 are not limited to those illustrated. For example, although not illustrated, the aerosol-generating device 100 may further include at least one fixing member (e.g.: the at least one fixing member 130 of FIGS. 8 and 9).

Referring to FIGS. 10 and 11, the aerosol-generating device 100 according to another embodiment may include the housing 110 including the battery accommodation space 110h, the at least one terminal 111, the battery 120 including the electrode 121, the battery cover 140, a hook structure 140a, and a coupling member 150. Components of the aerosol-generating device 100 may be the same as or similar to at least one of the components of the aerosol-generating device 100 of FIGS. 7 to 9, and redundant descriptions will be omitted below.

The battery cover 140 may be movably coupled to the housing 110 to open or close the battery accommodation space 110h. For example, the battery cover 140 may be rotatably coupled to the housing 110 to expose the battery accommodation space 110h to the outside of the housing 110 or cover the battery accommodation space 110h and close the battery accommodation space 110h.

For example, as shown in FIG. 10, the battery cover 140 may open the battery accommodation space 110h by exposing the battery accommodation space 110h to the outside of the housing 110, at the first position. When the battery cover 140 is at the first position, the user may replace the detachable battery 120.

In another example, as shown in FIG. 11, the battery cover 140 may move from the first position to the second position to cover the battery accommodation space 110h and close the battery accommodation space 110h. When the battery cover 140 is at the second position, the battery 120 accommodated in the battery accommodation space 110h may be protected by the battery cover 140 from an external impact or introduction of external impurities.

The hook structure 140a may be located in at least one area of the battery cover 140 and coupled to the coupling member 150 of the battery accommodation space 110h when the battery cover 140 is located at the second position to fix the battery cover 140 at the second position. For example, the hook structure 140a may be arranged in an area of the battery cover 140 facing the battery accommodation space 110h and have a hook shape, and when the battery cover 140 is located at the second position, the hook structure 140a may be hooked to the coupling member 150 to be coupled to the coupling member 150, but an embodiment is not limited thereto.

According to an embodiment, the coupling member 150 may protrude from one side surface of the battery accommodation space 110h and the hook structure 140a of the battery cover 140 may be hooked to the coupling member 150 when the battery cover 140 moves from the first position to the second position, and thus, the hook structure 140a and the coupling member 150 may be coupled to each other. For example, the coupling member 150 may include an elastic material and have a shape changed when the battery cover 140 moves from the first position to the second position. When the coupling member 150 includes an elastic material, the hook structure 140a and the coupling member 150 may be coupled to each other despite that the hook structure 140a is arranged in one area of the battery cover 140 facing the battery accommodation space 110h.

The aerosol-generating device 100 according to another embodiment may fix the battery cover 140 to the second position through the hook structure 140a and the coupling member 150, thereby protecting the battery 120 accommodated in the battery accommodation space 110h from an external impact or introduction of external impurities.

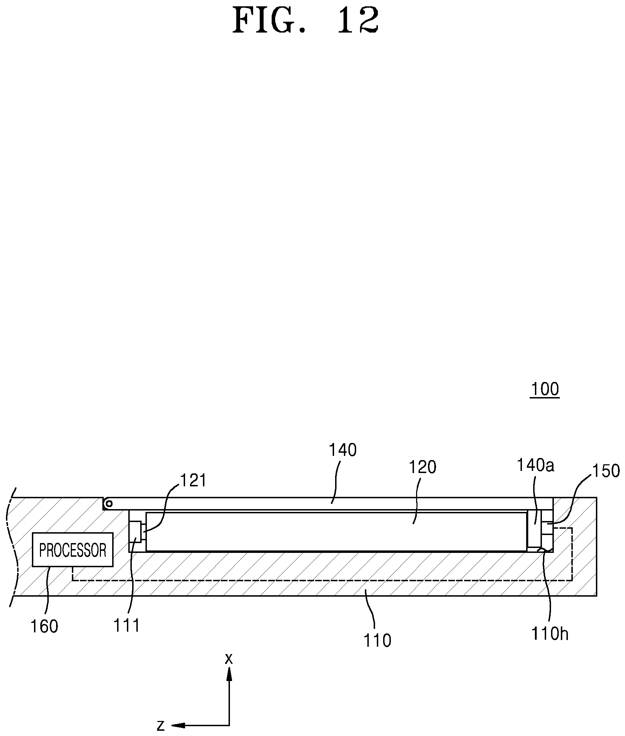

FIG. 12 is a diagram showing a shape of a hook structure changed in the aerosol-generating device of FIG. 11.

Referring to FIG. 12, the aerosol-generating device 100 according to another embodiment may include the housing 110 including the battery accommodation space 110h, the at least one terminal 111, the battery 120 including the electrode 121, the battery cover 140, the hook structure 140a, and the coupling member 150. The aerosol-generating device 100 according to another embodiment may be a device in which only a shape of the hook structure 140a is changed from the aerosol-generating device 100 of FIGS. 10 and 11, and redundant descriptions are omitted below.

The hook structure 140a may include a shape memory material (e.g.: a shape memory alloy or a shape memory polymer material) and have a shape changed in response to a temperature change of the battery 120. For example, the hook structure 140a may be arranged so as to, when the battery cover 140 is located at the second position, be coupled to the coupling member 150 while coming into contact with at least one area of the battery 120 accommodated in the battery accommodation space 110h. As the hook structure 140a comes into contact with the battery 120 when the battery cover 140 is at the second position, a temperature of the hook structure 140a may change in response to the temperature change of the battery 120.

For example, as illustrated in FIG. 11 above, when the temperature of the hook structure 140a is lower than a designated second temperature, the hook structure 140a may maintain a third shape to be couplable to the coupling member 150. For example, the hook structure 140a may maintain a hook shape to be couplable to the coupling member 150 at a temperature lower than the designated second temperature. As a result, in a condition where the hook structure 140a is lower than the designated second temperature, the coupling between the hook structure 140a and the coupling member 150 may be maintained and the battery cover 140 may be fixed at the second position.

In the present disclosure, the term "designated second temperature" may denote a temperature at which the shape of the hook structure 140a in contact with the battery 120 starts to be changed as the battery 120 is over-heated, and such a term may be used in a same meaning below.

In another example, as illustrated in FIG. 12, when the temperature of the hook structure 140a reaches the designated second temperature or greater, the hook structure 140a may be changed into a fourth shape to be decoupled from the coupling member 150. For example, while the aerosol-generating device 100 is charged or used, the temperature of the battery 120 may increase and the temperature of the hook structure 140a in contact with the battery 120 may also increase. When the temperature of the hook structure 140a reaches the designated second temperature or greater due to over-heating of the battery 120, the shape of the hook structure 140a may be changed from the third shape to the fourth shape to be decoupled from the coupling member 150. In the present disclosure, the term "fourth shape of the hook structure 140a" may denote a shape (e.g.: a rectangular parallelepiped) that the hook structure 140a is not in contact with the coupling member 150 or the hook structure 140a is not hooked to the coupling member 150, and such a term may be used in a same meaning below. When the temperature of the hook structure 140a is below the designated second temperature, the shape of the hook structure 140a may be changed again from the fourth shape to the third shape.

When the shape of the hook structure 140a is changed, the battery cover 140 and the coupling member 150 may be decoupled from each other and accordingly, the battery cover 140 may not be fixed at the second position but move to the first position. In other words, when the shape of the hook structure 140a is changed due to the over-heating of the battery 120, the battery cover 140 may move from the second position to the first position and open the battery accommodation space 110h.

The aerosol-generating device 100 according to another embodiment may maintain a closed state of the battery accommodation space 110h when the battery 120 is not deteriorated (e.g.: over-heated) and open the battery accommodation space 110h when the battery 120 is deteriorated, by using the hook structure 140a described above, thereby intuitively notifying the user of whether deterioration of the battery 120 has occurred.

The aerosol-generating device 100 according to another embodiment may further include a processor 160 electrically connected to the battery 120 and the coupling member 150 and controlling general operations of the aerosol-generating device 100. For example, the processor 160 may be electrically connected to the at least one terminal 111 to be electrically connected to the battery 120 through the at least one terminal 111, and electrically connected to the coupling member 150 through an electrical connecting member (e.g.: a wire or a flexible printed circuit board).

The processor 160 may detect a change in electrical characteristics of the coupling member 150 and detect whether the hook structure 140a and the coupling member 150 is coupled to each other, based on the electrical characteristics of the coupling member 150. The electrical characteristics of the coupling member 150 when the hook structure 140a and the coupling member 150 are coupled to each other may be different from the electrical characteristics of the coupling member 150 when the hook structure 140a and the coupling member 150 are decoupled from each other. For example, resistance, dielectric constant, and/or electrostatic capacitance of the coupling member 150 may vary depending on whether the hook structure 140a and the coupling member 150 are coupled to each other.

When it is identified that the hook structure 140a and the coupling member 150 are decoupled from each other, based on the electrical characteristics of the coupling member 150, the processor 160 may control the battery 120 to block power supplied to the heater. For example, when it is identified that the hook structure 140a and the coupling member 150 are decoupled from each other, the processor 160 may determine that the hook structure 140a and the coupling member 150 are decoupled from each other due to over-heating of the battery 120 and block power supplied to the heater.

The aerosol-generating device 100 according to another embodiment not only notifies the user of occurrence of deterioration of the battery 120 by opening the battery accommodation space 110h when the battery 120 is deteriorated, but also stops operations of the heater when the battery is deteriorated, thereby preventing malfunction of the aerosol-generating device 100 or deterioration of performance (e.g.: quality of generated amount of aerosols) of the aerosol-generating device 100, caused by the deterioration of the battery 120.

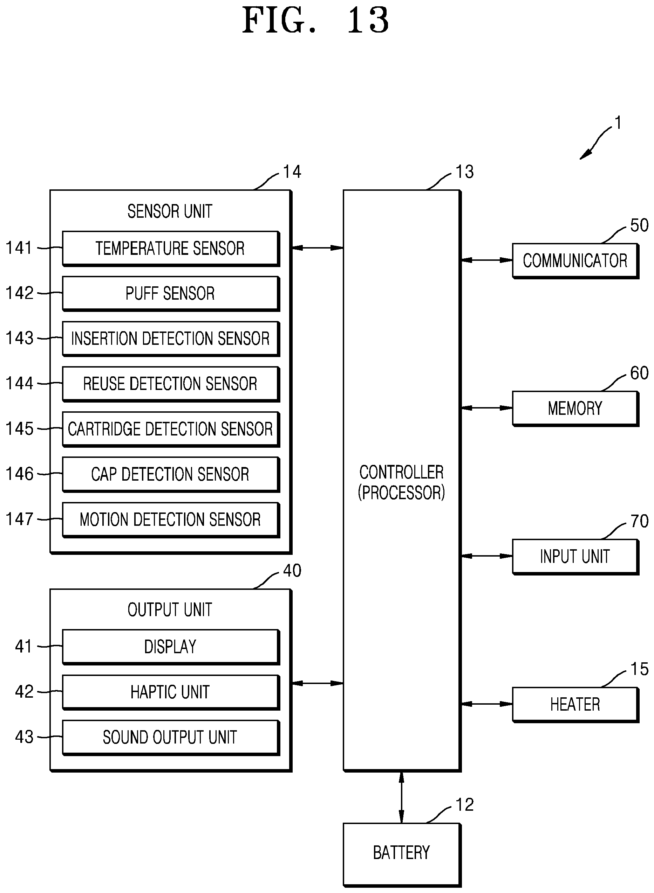

FIG. 13 is a block diagram of an aerosol-generating device according to an embodiment.

The aerosol generating device 1 may include a battery 12, a controller 13, a sensor unit 14, an output unit 40, an input unit 70, a communicator 50, a memory 60, and at least one heater 15. However, an internal structure of the aerosol generating device 1 is not limited to that illustrated in FIG. 13. In other words, according to the design of the aerosol generating device 1, one of ordinary skill in the art related to the present embodiment that some of the components shown in FIG. 13 may be omitted or new components may be added.

The sensor unit 14 may detect a state of the aerosol generating device 1 or a state around the aerosol generating device 1 and transmit detected information to the controller 13. On the basis of the detected information, the controller 13 may control the aerosol generating device 1 to perform various functions such as control of operations of the cartridge heater 15 and/or the stick heater 15, a restriction on smoking, determination of whether or not the stick and/or the cartridge 19 are inserted, and a notification display.

The sensor unit 14 may include at least one of a temperature sensor 141, a puff sensor 142, an insertion detection sensor 143, a reuse detection sensor 144, a cartridge detection sensor 145, a cap detection sensor 146, and a motion detection sensor 147.

The temperature sensor 141 may detect a temperature at which the cartridge heater 15 and/or the stick heater 15 are heated. The aerosol generating device 1 may include a separate temperature sensor for detecting the temperatures of the cartridge heater 15 and/or the stick heater 15, or the cartridge heater 15 and/or the stick heater 15 may operate as temperature sensors.

The temperature sensor 141 may output a signal corresponding to the temperature of the cartridge heater 15 and/or the stick heater 15. For example, the temperature sensor 141 may include a resistor element whose resistance value changes in correspondence to a change in the temperature of the cartridge heater 15 and/or the stick heater 15. The temperature sensor 141 may be implemented by a thermistor or the like, which is an element using a property of changing resistance according to temperature. Here, the temperature sensor 141 may output a signal corresponding to the resistance value of the resistor element as a signal corresponding to the temperature of the cartridge heater 15 and/or the stick heater 15. For example, the temperature sensor 141 may include a sensor that detects a resistance value of the cartridge heater 15 and/or the stick heater 15. Here, the temperature sensor 141 may output a signal corresponding to the resistance value of the cartridge heater 15 and/or the stick heater 15 as a signal corresponding to the temperature of the cartridge heater 15 and/or the stick heater 15.

The temperature sensor 141 may be arranged around the battery 12 to monitor a temperature of the battery 12. The temperature sensor 141 may be arranged adjacent to the battery 12. For example, the temperature sensor 141 may be attached to one surface of a battery that is the battery 12. For example, the temperature sensor 141 may be mounted on one surface of a PCB.

The temperature sensor 141 may be arranged inside the body to detect an internal temperature of the body.

The puff sensor 142 may detect a puff by a user on the basis of various physical changes in an air flow path. The puff sensor 142 may output a signal corresponding to the puff. For example, the puff sensor 142 may be a pressure sensor. The puff sensor 142 may output a signal corresponding to internal pressure of the aerosol generating device 1. Here, the internal pressure of the aerosol generating device 1 may correspond to pressure of the air flow path through which a gas flows. The puff sensor 142 may be arranged in correspondence to the air flow path through which the gas flows in the aerosol generating device 1.

The insertion detection sensor 143 may detect insertion and/or removal of the stick. The insertion detection sensor 143 may detect a signal change due to the insertion and/or removal of the stick. The insertion detection sensor 143 may be installed around an insertion space. The insertion detection sensor 143 may detect the insertion and/or removal of the stick according to a change in a dielectric constant inside the insertion space. For example, the insertion detection sensor 143 may be an inductive sensor and/or a capacitance sensor.

The inductive sensor may include at least one coil. The coil of the inductive sensor may be arranged adjacent to the insertion space. For example, when a magnetic field changes around the coil through which a current flows, characteristics of the current flowing through the coil may change according to Faraday's law of electromagnetic induction. Here, the characteristics of the current flowing through the coil may include a frequency of an alternating current, a current value, a voltage value, an inductance value, an impedance value, and the like.

The inductive sensor may output a signal corresponding to the characteristics of the current flowing through the coil. For example, the inductive sensor may output a signal corresponding to an inductance value of the coil.

The capacitance sensor may include a conductor. The conductor of the capacitance sensor may be arranged adjacent to the insertion space. The capacitance sensor may output a signal corresponding to an ambient electromagnetic characteristic, e.g., a capacitance around the conductor. For example, when the stick including a metal wrapper is inserted into the insertion space, the electromagnetic characteristic around the conductor may be changed by the wrapper of the stick.

The reuse detection sensor 144 may detect whether or not the stick is reused. The reuse detection sensor 144 may be a color sensor. The color sensor may detect a color of the stick. The color sensor may detect a color of a portion of the wrapper wrapping the outside of the stick. The color sensor may detect a value for an optical characteristic corresponding to a color of an object, on the basis of light reflected from the object. For example, the optical characteristic may be a wavelength of light. The color sensor may be implemented as a single component with a proximity sensor or may be implemented as a separate component distinguished from the proximity sensor.

At least a portion of the wrapper constituting the stick may have a color changing by an aerosol. When the stick is inserted into the insertion space, the reuse detection sensor 144 may be arranged in correspondence to a location at which at least the portion of the wrapper whose color changes by the aerosol is arranged. For example, before the stick is used by the user, the color of at least the portion of the wrapper may be a first color. Here, when at least the portion of the wrapper is wetted by the aerosol while the aerosol generated by the aerosol generating device 1 passes through the stick, the color of at least the portion of the wrapper may be changed to a second color. The color of at least the portion of the wrapper may be maintained in the second color after changing from the first color to the second color.

The cartridge detection sensor 145 may detect mounting and/or removal of the cartridge 19. The cartridge detection sensor 145 may be implemented by an inductance-based sensor, a capacitive sensor, a resistance sensor, a hall sensor (a hall IC) using a hall effect, or the like.

The cap detection sensor 146 may detect mounting and/or removal of a cap. When the cap is detached from the body, a portion of the cartridge 19 and the body covered by the cap may be exposed to the outside. The cap detection sensor 146 may be implemented by a contact sensor, a hall sensor (a hall IC), an optical sensor, or the like.

The motion detection sensor 147 may detect a motion of the aerosol generating device 1. The motion detection sensor 147 may be implemented as at least one of an acceleration sensor and a gyro sensor.

In addition to the sensors 141 to 147 described above, the sensor unit 14 may further include at least one of a humidity sensor, an atmospheric pressure sensor, a magnetic sensor, a position sensor (e.g., a global positioning system (GPS)), and a proximity sensor. Functions of the respective sensors may be intuitively inferred from names thereof by one of ordinary skill in the art, and thus, detailed descriptions thereof may be omitted.

The output unit 40 may output information regarding the state of the aerosol generating device 1 and provide the information to the user. The output unit 40 may include at least one of a display 41, a haptic unit 42, and a sound output unit 43, but is not limited thereto. When the display 41 and a touch pad form a layer structure to form a touch screen, the display 41 may be used as an input device in addition to an output device.

The display 41 (e.g., display 130 of Fig.4) may visually provide the user with information regarding the aerosol generating device 1. For example, the information regarding the aerosol generating device 1 may refer to various types of information such as a charging/discharging state of the battery 12 of the aerosol-generating device 1, a preheating state of the stick heater 15, the insertion/removal state of the stick and/or the cartridge 19, the mounting/removal state of the cap, and the restriction on use of the aerosol generating device 1 (e.g., detection of an abnormal article), and the display 41 may output the information to the outside. For example, the display 41 may be in the form of a light emitting diode (LED) light emitting device. For example, the display 41 may be a liquid crystal display (LCD) panel, an organic light emitting display (OLED)panel, or the like.

The haptic unit 42 may tactilely provide the user with the information regarding the aerosol generating device 1 by converting an electrical signal into a mechanical stimulus or an electrical stimulus. For example, when initial power is supplied to the cartridge heater 15 and/or the stick heater 15 for a set time, the haptic unit 42 may generate vibration corresponding to completion of initial preheating. The haptic unit 42 may include a vibration motor, a piezoelectric element, or an electrical stimulation device.

The sound output unit 43 may audibly provide the user with the information regarding the aerosol generating device 1. For example, the sound output unit 43 may convert the electrical signal into a sound signal and output the sound signal to the outside.

The battery 12 may supply power used to operate the aerosol generating device 1. The battery 12 may supply power so that the cartridge heater 15 and/or the stick heater 15 may be heated. In addition, the battery 12 may supply power needed for operations of the sensor unit 14, the output unit 40, the input unit 70, the communicator 50, and the memory 60, which are other components provided within the aerosol generating device 1. The battery 12 may be a rechargeable battery or a disposable battery. For example, the battery 12 may be a lithium polymer (LiPoly) battery, but is not limited thereto.

Although not shown in FIG. 13, the aerosol generating device 1 may further include a power protection circuit. The power protection circuit may be electrically connected to the battery 12 and may include a switching element.

The power protection circuit may cut off an electrical path for the battery 12 according to a certain condition. For example, the power protection circuit may cut off the electrical path for the battery 12 when a voltage level of the battery 12 is a first voltage or more corresponding to overcharging. For example, the power protection circuit may cut off the electrical path for the battery 12 when the voltage level of the battery 12 is less than a second voltage corresponding to overdischarge.

The stick heater 15 may be supplied with power from the battery 12 and heat a medium or an aerosol generating material within the stick. Although not shown in FIG. 13, the aerosol generating device 1 may further include a power conversion circuit (e.g., a DC/DC converter) that converts power of the battery 12 and supplies the converted power to the cartridge heater 15 and/or the stick heater 15. In addition, when the aerosol generating device 1 generates an aerosol by an induction heating method, the aerosol generating device 1 may further include a DC/AC converter that converts DC power of the battery 12 into AC power.

The controller 13, the sensor unit 14, the output unit 40, the input unit 70, the communicator 50, and the memory 60 may be supplied with power from the battery 12 to perform functions. Although not shown in FIG. 13, the aerosol generating device 1 may further include a power conversion circuit that converts power of the battery 12 and supplies the power to each of components, e.g., a low-dropout (LDO) circuit or a voltage regulator circuit. Also, although not shown in FIG. 13, a noise filter may be provided between the battery 12 and the stick heater 15. The noise filter may be a low pass filter. The low pass filter may include at least one inductor and a capacitor. A cutoff frequency of the low pass filter may correspond to a frequency of a high-frequency switching current applied from the battery 12 to the stick heater 15. The low pass filter may prevent a high-frequency noise component from being applied to the sensor unit 14, such as the insertion detection sensor 143.

In an embodiment, the cartridge heater 15 and/or the stick heater 15 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. In addition, the stick heater 15 may be implemented by a metal wire, a metal plate on which an electrically conductive track is arranged, or a ceramic heating element, but is not limited thereto.

In an embodiment, the stick heater 15 may include an induction heater. For example, the stick heater 15 may include a susceptor that generates heat through a magnetic field applied by a coil to heat an aerosol generating material.

The input unit 70 may receive information input from the user or output the information to the user. For example, the input unit 70 may be a touch panel. The touch panel may include at least one touch sensor for detecting a touch. For example, the touch sensor may include a capacitive touch sensor, a resistive touch sensor, a surface acoustic touch sensor, an infrared touch sensor, or the like, but is not limited thereto.

The display 41 and the touch panel may be implemented as one panel. For example, the touch panel may be inserted into the display 41 (e.g., may be a on-cell type or in-cell type). For example, the touch panel may be added on the display 41 (e.g., may be an add-on type).

Meanwhile, the input unit 70 may include a button, a keypad, a dome switch, a jog wheel, a jog switch, or the like, but is not limited thereto.

The memory 60 may be hardware for storing various types of data processed within the aerosol generating device 1 and may store pieces of data processed by the controller 13 and pieces of data to be processed by the controller 13. The memory 60 may include at least one type of storage medium from among a flash memory type, a hard disk type, a multimedia card micro type, a card type memory (e.g., a SD or XD memory or the like), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 60 may store data or the like regarding an operation time of the aerosol generating device 1, the maximum number of puffs, the current number of puffs, at least one temperature profile, and a smoking pattern of the user.

The communicator 50 may include at least one component for communication with another electronic device. For example, the communicator 50 may include at least one of a short-range wireless communication unit and a wireless communication unit.

The short-range wireless communication unit may include a Bluetooth communication unit, a Bluetooth low energy (BLE) communication unit, a near field communication unit, a wireless local area network ((WLAN) (Wi-Fi)) communication unit, a Zigbee communication unit, an infrared data association (IrDA) communication unit, a Wi-Fi Direct (WFD) communication unit, an ultra wideband (UWB) communication unit, an Ant+ communication unit, and the like, but is not limited thereto.

The wireless communication unit may include a cellular network communication unit, an Internet communication unit, a computer network (e.g., LAN or WAN) communication unit, and the like, but is not limited thereto.

Although not shown in FIG. 13, the aerosol generating device 1 may further include a connection interface such as a universal serial bus (USB) interface, and may connect with another external device through the connection interface such as a USB interface to transmit and receive information or charge the power 11.

The controller 13 may control an overall operation of the aerosol generating device 1. In an embodiment, the controller 13 may include at least one processor. The processor may be implemented as an array of a plurality of logic gates or may be implemented as a combination of a general-purpose microprocessor and a memory that stores a program executable by the microprocessor. In addition, one of ordinary skill in the art to which the present embodiment pertains may understand that the processor may be implemented as other types of hardware.

The controller 13 may control the temperature of the stick heater 15 by controlling supply power from the battery 12 to the stick heater 15. The controller 13 may control the temperature of the cartridge heater 15 and/or the stick heater 15 on the basis of the temperature of the cartridge heater 15 and/or the stick heater 15 sensed by the temperature sensor 141. The controller 13 may adjust power supplied to the cartridge heater 15 and/or the stick heater 15, on the basis of the temperature of the cartridge heater 15 and/or the stick heater 15. For example, the controller 13 may determine a target temperature for the cartridge heater 15 and/or the stick heater 15, on the basis of a temperature profile stored in the memory 60.

The aerosol generating device 1 may include a power supply circuit (not shown) electrically connected to the battery 12 between the battery 12 and the cartridge heater 15 and/or the stick heater 15. The power supply circuit may be electrically connected to the cartridge heater 15, the stick heater 15, or an induction coil 181. The power supply circuit may include at least one switching element. The switching element may be implemented by a bipolar junction transistor (BJT), a field effective transistor (FET), or the like. The controller 13 may control the power supply circuit.

The controller 13 may control power supply by controlling switching of the switching element of the power supply circuit. The power supply circuit may be an inverter that converts DC power output from the battery 12 into AC power. For example, the inverter may include a full-bridge circuit or a half-bridge circuit including a plurality of switching elements.

The controller 13 may turn on the switching element so that power is supplied from the battery 12 to the cartridge heater 15 and/or the stick heater 15. The controller 13 may turn off the switching element to cut off the supply of power to the cartridge heater 15 and/or the stick heater 15. The controller 13 may adjust a current supplied from the battery 12 by adjusting a frequency and/or duty ratio of a current pulse input into the switching element.

The controller 13 may control a voltage output from the battery 12 by controlling switching of the switching element of the power supply circuit. The power conversion circuit may convert the voltage output from the battery 12. For example, the power conversion circuit may include a buck-converter that steps down the voltage output from the battery 12. For example, the power conversion circuit may be implemented through a buck-boost converter, a zener diode, or the like.

The controller 13 may adjust a level of the voltage output from the power conversion circuit by controlling an on/off operation of the switching element included in the power conversion circuit. When the switching element continues to be turned on, the level of the voltage output from the power conversion circuit may correspond to a level of a voltage output from the battery 12. The duty ratio for the on/off operation of the switching element may correspond to a ratio of the voltage output from the power conversion circuit to the voltage output from the battery 12. The level of the voltage output from the power conversion circuit may decrease with a decrease in the duty ratio for the on/off operation of the switching element. The stick heater 15 may be heated on the basis of the voltage output from the power conversion circuit.

The controller 13 may control power to be supplied to the stick heater 15 by using at least one of a pulse width modulation (PWM) method and a proportional-integral-differential (PID) method.

For example, the controller 13 may control a current pulse having a certain frequency and duty ratio to be supplied to the stick heater 15 by using the PWM method. The controller 13 may control the power supplied to the stick heater 15 by adjusting the frequency and duty ratio of the current pulse.

For example, the controller 13 may determine a target temperature to be controlled, on the basis of the temperature profile. The controller 13 may control the power supplied to the stick heater 15 by using the PID method, which is a feedback control method through a difference value between the temperature of the stick heater 15 and the target temperature, a value obtained by integrating the difference value over time, and a value obtained by differentiating the difference value over time.

The controller 13 may prevent the cartridge heater 15 and/or the stick heater 15 from overheating. For example, on the basis that the temperature of the cartridge heater 15 and/or the stick heater 15 exceeds a preset limit temperature, the controller 13 may control an operation of the power conversion circuit so that the supply of power to the cartridge heater 15 and/or the stick heater 15 stops. For example, on the basis that the temperature of the cartridge heater 15 and/or the stick heater 15 exceeds the preset limit temperature, the controller 13 may reduce an amount of power supplied to the cartridge heater 15 and/or the stick heater 15 by a certain ratio. For example, on the basis that the temperature of the cartridge heater 15 exceeds the preset limit temperature, the controller 13 may determine that the aerosol generating material accommodated in the cartridge 19 is exhausted and cut off the power supply to the cartridge heater 15.

The controller 13 may control charging and discharging of the battery 12. The controller 13 may identify the temperature of the battery 12 on the basis of an output signal of the temperature sensor 141.

When a power line is connected to a battery terminal of the aerosol generating device 1, the controller 13 may identify whether or not the temperature of the battery 12 is a first limit temperature or more which is a reference for blocking charging of the battery 12. When the temperature of the battery 12 is less than the first limit temperature, the controller 13 may control the battery 12 to be charged, on the basis of a preset charging current. The controller 13 may block charging of the battery 12 when the temperature of the battery 12 is the first limit temperature or more.

While the power of the aerosol generating device 1 is turned on, the controller 13 may identify whether or not the temperature of the battery 12 is a second limit temperature or more which is a reference for blocking discharge of the battery 12. The controller 13 may control power stored in the battery 12 to be used when the temperature of the battery 12 is less than the second limit temperature. When the temperature of the battery 12 is the second limit temperature or more, the controller 13 may stop using the power stored in the battery 12.

The controller 13 may calculate a remaining capacity of the power stored in the battery 12. For example, the controller 13 may calculate the remaining capacity of the battery 12 on the basis of a voltage and/or current sensing value of the battery 12.

The controller 13 may determine, through the insertion detection sensor 143, whether or not the stick is inserted into the insertion space. The controller 13 may determine that the stick is inserted, on the basis of the output signal of the insertion detection sensor 143. When determining that the stick is inserted into the insertion space, the controller 13 may control power to be supplied to the cartridge heater 15 and/or the stick heater 15. For example, the controller 13 may supply power to the cartridge heater 15 and/or the stick heater 15, on the basis of the temperature profile stored in the memory 60.

The controller 13 may determine whether or not the stick is removed from the insertion space. For example, the controller 13 may determine, through the insertion detection sensor 143, whether or not the stick is removed from the insertion space. For example, when the temperature of the stick heater 15 is the preset limit temperature or more or when a temperature change gradient of the stick heater 15 is a set gradient, the controller 13 may determine that the stick is removed from the insertion space. When determining that the stick is removed from the insertion space, the controller 13 may cut off the supply of power to the cartridge heater 15 and/or the stick heater 15.

The controller 13 may control a power supply time and/or a power supply amount with respect to the stick heater 15, according to a state of the stick detected by the sensor unit 14. The controller 13 may identify, on the basis of a look-up table, a level range including a level of a signal of the capacitance sensor. The controller 13 may determine an amount of moisture in the stick, according to the identified level range.

When the stick is over-humidified, the controller 13 may increase a preheating time of the stick compared to a normal state by controlling the power supply time with respect to the stick heater 15.

The controller 13 may determine, through the reuse detection sensor 144, whether or not the stick inserted into the insertion space is reused. For example, the controller 13 may compare a sensing value of a signal of the reuse detection sensor 144 with a first reference range including a first color and when the sensing value is included in the first reference range, determine that the stick is not used. For example, the controller 13 may compare the sensing value of the signal of the reuse detection sensor 144 with a second reference range including a second color and when the sensing value is included in the second reference range, determine that the stick is used. When determining that the stick is used, the controller 13 may cut off the supply of power to the cartridge heater 15 and/or the stick heater 15.

The controller 13 may determine, through the cartridge detection sensor 145, whether or not the cartridge 19 is coupled and/or removed. For example, the controller 13 may determine whether or not the cartridge 19 is coupled or removed, on the basis of a sensing value of the signal of the cartridge detection sensor 145.

The controller 13 may determine whether or not the aerosol generating material of the cartridge 19 is exhausted. For example, the controller 13 may apply power to preheat the cartridge heater 15 and/or the stick heater 15, determine whether or not the temperature of the cartridge heater 15 exceeds the limit temperature in a preheating period, and when the temperature of the cartridge heater 15 exceeds the limit temperature, determine that the aerosol generating material of the cartridge 19 is exhausted. When determining that the aerosol generating material of the cartridge 19 is exhausted, the controller 13 may cut off the supply of power to the cartridge heater 15 and/or the stick heater 15.

The controller 13 may determine whether or not the cartridge 19 may be usable. When the current number of puffs is greater than or equal to the maximum number of puffs set in the cartridge 19, the controller 13 may determine, on the basis of data stored in the memory 60, that the cartridge 19 may not be usable. For example, when the total time for which the heater 24 is heated is a preset maximum time or more or the total amount of power supplied to the heater 24 is a preset maximum amount of power or more, the controller 13 may determine that the cartridge 19 may not be usable.

The controller 13 may determine inhalation by the user through the puff sensor 142. For example, the controller 13 may determine whether or not a puff occurs, on the basis of a sensing value of a signal of the puff sensor 142. For example, the controller 13 may determine an intensity of the puff, on the basis of the sensing value of the signal of the puff sensor 142. When the number of puffs reaches the preset maximum number of puffs or when puffs are not detected for a preset time or more, the controller 13 may cut off the supply of power to the cartridge heater 15 and/or the stick heater 15.

The controller 13 may determine, through the cap detection sensor 146, whether a cap is coupled and/or removed. For example, the controller 13 may determine whether or not the cap is coupled and/or removed, on the basis of a sensing value of a signal of the cap detection sensor 146.

The controller 13 may control the output unit 40 on the basis of the result of detection by the sensor unit 14. For example, when the number of puffs counted through the puff sensor 142 reaches a preset number, the controller 13 may notify the user that the aerosol generating device 1 is soon terminated, through at least one of the display 41, the haptic unit 42, and the sound output unit 43. For example, the controller 13 may notify the user through the output unit 40 that the stick is not present in the insertion space, on the basis of the determination that the stick is not present in the insertion space. For example, the controller 13 may notify the user through the output unit 40 that the cartridge 19 and/or the cap are not mounted, on the basis of the determination that the cartridge 19 and/or the cap are not mounted. For example, the controller 13 may transmit information regarding the temperature of the cartridge heater 15 and/or the stick heater 15 to the user through the output unit 40.

The controller 13 may store and update, in the memory 60, a history of a certain event that occurs, on the basis of the occurrence of the event. The event may include detection of insertion of the stick, initiation of heating of the stick, detection of puffs, termination of the puffs, detection of overheating of the cartridge heater 15 and/or the stick heater 15, detection of application of an overvoltage to the cartridge heater 15 and/or the stick heater 15, termination of heating of the stick, an operation such as power on/off of the aerosol generating device 1, initiation of charging of the battery 12, detection of overcharging of the battery 12, termination of charging of the battery 12, and the like. The history of the event may include a date and time when the event occurs, log data corresponding to the event, and the like. For example, when the certain event is the detection of insertion of the stick, the log data corresponding to the event may include data regarding the sensing value of the insertion detection sensor 143 and the like. For example, when the certain event is the detection of overheating of the cartridge heater 15 and/or the stick heater 15, the log data corresponding to the event may include data regarding the temperature of the cartridge heater 15 and/or the stick heater 15, the voltage applied to the cartridge heater 15 and/or the stick heater 15, a current flowing through the cartridge heater 15 and/or the stick heater 15, and the like.

The controller 13 may control to form a communication link with an external device such as a mobile terminal of the user. When data regarding authentication is received from the external device through the communication link, the controller 13 may release a restriction on use of at least one function of the aerosol generating device 1. Here, the data regarding the authentication may include data indicating completion of user authentication for the user corresponding to the external device. The user may perform the user authentication through the external device. The external device may determine whether or not user data is valid, on the basis of the birthday of the user, a unique number indicating the user, and the like and receive, from an external server, data regarding use authority over the aerosol generating device 1. The external device may transmit the data indicating the completion of the user authentication to the aerosol generating device 1, on the basis of the data regarding the use authority. When the user authentication is completed, the controller 13 may release the restriction on the use of at least one function of the aerosol generating device 1. For example, when the user authentication is completed, the controller 13 may release a restriction on use of a heating function of supplying power to the stick heater 15.

The controller 13 may transmit data regarding the state of the aerosol generating device 1 to the external device through the communication link formed with the external device. On the basis of the received data regarding the state of the aerosol generating device 1, the external device may output the remaining capacity of the battery 12 of the aerosol generating device 1, an operation mode, and the like through a display of the external device.

The external device may transmit a location search request to the aerosol generating device 1, on the basis of an input for initiating a location search of the aerosol generating device 1. When receiving the location search request from the external device, the controller 13 may control at least one of output devices to perform an operation corresponding to the location search, on the basis of the received location search request. For example, the haptic unit 42 may generate vibration in response to the location search request. For example, the display 41 may output an object corresponding to the location search and an end of the search in response to the location search request.

When receiving firmware data from the external device, the controller 13 may control to perform a firmware update. The external device may identify a current version of firmware of the aerosol generating device 1 and determine whether or not a new version of the firmware is present. When an input for requesting firmware download is received, the external device may receive a new version of firmware data and transmit the new version of firmware data to the aerosol generating device 1. When receiving the new version of firmware data, the controller 13 may control the firmware update of the aerosol generating device 1 to be performed.

The controller 13 may transmit data regarding a sensing value of at least one sensor unit 14 to the external server (not shown) through the communicator 50, and receive from the server and store a learning model generated by learning the sensing value through machine learning such as deep learning. The controller 13 may perform an operation of determining an inhalation pattern of the user, an operation of generating a temperature profile, and the like by using the learning model received from the server. The controller 13 may store, in the memory 60, sensing value data of at least one sensor unit 14, data for training an artificial neural network (ANN), and the like. For example, the memory 60 may store a database for each component provided in the aerosol generating device 1, which is for training the ANN, and weights and biases constituting the structure of the ANN. The controller 13 may generate at least one learning model used for determining the inhalation pattern of the user, generating the temperature profile, and the like, by learning data regarding the sensing value of the at least one sensor unit 14, the inhalation pattern of the user, the temperature profile, and the like which are stored in the memory 60.

Some embodiments or other embodiments of the disclosure described above are not exclusive or distinct from each other. In some embodiments or other embodiments of the disclosure described above, respective components or functions may be used in combination with one another or combined with one another.

For example, a component A described in a particular embodiment and/or drawing and a component B described in another embodiment and/or drawing may be combined with each other. In other words, even when coupling between components is not directly described, the coupling may be made except when the coupling is described as impossible.

The above description should not be construed as being limited in all respects but should be considered illustrative. The scope of the disclosure should be determined by the logical interpretation of appended claims, and all changes within the equivalent scope of the disclosure are included in the scope of the disclosure.

## Claims

1. An aerosol-generating device comprising:
a housing including a battery accommodation space;
a heater located inside the housing and configured to heat an aerosol-generating material;
a battery detachably coupled to the battery accommodation space, configured to supply power to the heater, and comprising at least one accommodation groove; and
at least one fixing member arranged in the battery accommodation space and configured to fix the battery to the battery accommodation space by being coupled to the at least one accommodation groove when the battery is coupled to the battery accommodation space,
wherein a shape of the at least one fixing member is changed to be decoupled from the at least one accommodation groove when a temperature reaches a designated first temperature or greater while being coupled to the at least one accommodation groove.

2. The aerosol-generating device of claim 1, wherein the at least one fixing member comprises a shape memory material.

3. The aerosol-generating device of claim 1, wherein a temperature of the at least one fixing member changes according to a temperature change of the battery when the at least one fixing member is coupled to the at least one accommodation groove.

4. The aerosol-generating device of claim 3, wherein the shape of the at least one fixing member maintains a first shape to be couplable to the at least one accommodation groove when the temperature is lower than the designated first temperature, and
the shape of the at least one fixing member is changed into a second shape to be decoupled from the at least one accommodation groove when the temperature is the designated first temperature or greater.

5. The aerosol-generating device of claim 1, further comprising at least one terminal arranged in the battery accommodation space and coming into contact with an electrode of the battery accommodation space when the battery is coupled to the battery accommodation space.

6. The aerosol-generating device of claim 1, further comprising a battery cover movably coupled to the housing and configured to open or close the battery accommodation space.

7. The aerosol-generating device of claim 6, wherein the battery cover is rotatably coupled to the housing, and exposes the battery accommodation space to outside of the housing at a first position and closes the battery accommodation space by rotating to a second position from the first position.

8. The aerosol-generating device of claim 7, wherein the battery accommodation space comprises a coupling member arranged on one side surface of the battery accommodation space and having elasticity, and
the battery cover comprises a hook structure coupled to the coupling member at the second position.

9. The aerosol-generating device of claim 8, wherein the battery cover is fixed at the second position when the hook structure and the coupling member are coupled to each other.

10. The aerosol-generating device of claim 8, wherein the hook structure is arranged to be in contact with at least one area of the battery coupled to the battery accommodation space when the battery cover is located at the second position.

11. The aerosol-generating device of claim 10, wherein the hook structure comprises a shape memory material.

12. The aerosol-generating device of claim 11, wherein a shape of the hook structure is changed to be decoupled from the coupling member when a temperature reaches a designated second temperature or greater.

13. The aerosol-generating device of claim 12, wherein the shape of the hook structure maintains a third shape couplable to the coupling member when the temperature is lower than the designated second temperature, and
the shape of the hook structure is changed into a fourth shape to be decoupled from the coupling member when the temperature is the designated second temperature or greater.

14. The aerosol-generating device of claim 12, further comprising a processor electrically connected to the coupling member and the battery,
wherein the processor is configured to detect whether the coupling member and the hook structure have been coupled to each other, based on electrical characteristics of the coupling member.

15. The aerosol-generating device of claim 14, wherein the processor is further configured to control the battery so that power supplied to the heater is blocked when the hook structure and the coupling member are decoupled from each other.
